# EUROPEAN PATENT SPECIFICATION

(11) **EP 2 835 854 B1**
(45) Date of publication and mention of the grant of the patent: **06.09.2017**
(21) Application number: 13192714.7
(22) Date of filing: 13.11.2013
(51) Int. Cl.: H01M 8/241, H01M 8/04119, H01M 8/0247, H01M 8/1004, H01M 8/2465, H01M 8/2455, H01M 8/00

(54) **FUEL CELL PACK AND FUEL CELL PACK ASSEMBLY**
BRENNSTOFFZELLENSTAPEL UND BRENNSTOFFZELLENPACKANORDNUNG
BLOC DE PILES À COMBUSTIBLE ET ASSEMBLAGE DE BLOCS DE PILES À COMBUSTIBLE

(30) Priority: 08.08.2013 TW 102128408
(43) Date of publication of application: 11.02.2015
(73) Proprietor: Gunitech Corp., Hsinchu County 307 (TW)
(72) Inventor: Ho, Fang-Yu, County 307 Qionlin Township Hsinchu (TW); Lin, Ssu-Tai, County 307 Qionlin Township Hsinchu (TW); Shiu, Huan-Ruei, County 307 Qionlin Township Hsinchu (TW); Zhao, Enoch, County 307 Qionlin Township Hsinchu (TW); Wu, Yueh-Chang, County 307 Qionlin Township Hsinchu (TW); Hung, Chien-Ju, County 307 Qionlin Township Hsinchu (TW)
(74) Representative: Altenburg, Bernardus Stephanus Franciscus

(56) References cited:
- EP-A2- 1 134 830
- EP-A2- 1 241 725
- EP-A2- 1 596 457
- CN-C- 100 334 761
- JP-A- 2007 311 334
- JP-A- 2011 233 342
- US-A1- 2005 277 007
- US-A1- 2009 155 663

## Description

### BACKGROUND OF THE INVENTION

### Field of the Invention

The present invention relates to a fuel cell pack; more particularly, the present invention relates to a fuel cell pack in which the reacting fuel can converge smoothly and uniformly.

### Description of the Related Art

As people's environmental consciousness improves, it is important to avoid damaging the environment in energy development and application. The fuel cell technology for generating energy is highly efficient and produces low noise and no pollution. Currently, fuel cells with the membrane electrode assembly (such as proton exchange membrane fuel cells) or direct-methanol fuel cells are the most common fuel cells.

No matter the type of fuel cell, when the membrane electrode assembly reacts with the fuel, the reaction produces water. The water wets the membrane electrode assembly to maintain the proton conductivity and thus the performance of the cell. On the other hand, if too much water blocks the flow channel of the fuel cell and affects the flowing speed of the fuel, the fuel cannot react with the membrane electrode assembly smoothly. As a result, the performance of the fuel cell will be unstable. Therefore, the flow channel must be designed to allow the fuel to flow uniformly and have a suitable discharging function to maintain the stability of the fuel cell.

EP1134830 relates to a a fuel cell pack including a plurality of cells each having a membrane in its middle and a cathode and an anode at both sides of the membrane, collector plates contacting the cathode and the anode, respectively, in each cell, and an electrical connection member for electrically connecting adjacent cells. The cells are evenly disposed on an arbitrary plane with a hollow interposed between two adjacent cells, and the electrical connection member is positioned in the hollow. The fuel cell pack includes a porous fuel diffusion member contacting the anode of each cell; a porous air contact member contacting the cathode of each cell; an anode end plate and a cathode end plate disposed at the side of the anodes of the cells and at the side of the cathodes of the cells, respectively, for protecting the cells; fuel supply and discharge means for supplying fuel toward the anodes in the hollow and discharging the fuel; a fuel flow stopper disposed at a portion at the part of the cathodes in the hollow, the fuel flow stopper preventing fuel flowing at a portion at the part of the anodes in the hollow from flowing toward the portion at the part of the cathodes in the hollow; and a sealing member for sealing the anodes of the cells and the portion of the hollow corresponding to the anodes.

EP1596457 relates to a solid electrolyte fuel cell configuration comprising a plurality of fuel cells each fuel cell including a sheet-shaped solid electrolyte substrate having an anode layer on one surface and a cathode layer on the other surface, wherein adjacent fuel cells are electrically connected in series by a single metal mesh embedded or fastened at one end to the anode layer of one fuel cell and embedded or fastened at the other end to the cathode layer of an adjacent fuel cell. The fuel cells are arranged with a gap between each fuel cell and the metal mesh passes through the gap between adjacent fuel cells.

JP2007311334 relates to a separator for a fuel cell and includes resin layers with an electrical conductivity and a multilayer structure, which are formed by electrodeposition so as to cover metal substrates. The resin layers contain a conductive material. The separator is manufactured by formation of the resin layers with the multilayer structure, which are formed more than once on the metal substrates by the electrodeposition using an electrodeposition liquid in which the conductive material is dispersed in an electrodepositable resin.

CN100334761 relates to a plane fuel battery that comprises a membrane electrode group and two porous net conductors. Using a thermosetting material to fix the anode and cathode catalytic electrodes with net or porous conductor as the electrodes to draw charge of fuel battery; the battery monomer comprises a membrane electrode group, a proton exchange membrane, a anode and cathode catalytic electrodes. The two catalytic electrodes are combined on two sides of proton exchange membrane, forming a membrane group.

### SUMMARY OF THE INVENTION

It is an object of the present invention to provide a fuel cell pack in which the reacting fuel can converge smoothly and uniformly.

To achieve the abovementioned objects, the fuel cell pack of the present invention has at least N membrane electrode assemblies as specified in claim 1.

According to the present invention, each of the second electrode conductive layers and the independent second electrode conductive layer include a fluid channel and a convex structure, wherein the convex structure is located around the fluid channel.

According to the present invention, the convex structure is in contact with the membrane electrode assembly correspondingly.

According to one embodiment of the present invention, each of the second electrode conductive layers and the independent second electrode conductive layer include a plurality of perforations, allowing a reacting fuel to sequentially flow into the N fuel cells.

According to one embodiment of the present invention, the fluid distributing unit includes a first hole and a second hole. A position of the first hole is corresponding to a position of the 1^{st} fuel cell, and a position of the second hole is corresponding to the Nth fuel cell.

According to the present invention, the fuel cell pack further includes a first appearance part. The first appearance part is in contact with another surface of the fluid distributing unit.

According to the present invention, the fuel cell pack further includes a second appearance part, wherein the second appearance part and the N-1 first electrode conductive layers are connected to the independent first electrode conductive layer, and the second appearance part includes a plurality of ventilation holes.

According to one embodiment of the present invention, each of the first electrode conductive layers and the independent first electrode conductive layer include a plurality of ventilation holes.

According to one embodiment of the present invention, the independent first electrode conductive layer and the independent second electrode conductive layer both include a power connector.

The present invention further provides a fuel cell pack formed from a plurality of the fuel cell packs, wherein each of the fuel cell packs forms a geometric structure via a serial-parallel connection; the geometric structure can be flat, square, circular, polygonal, or a combination of the abovementioned structures.

According to one embodiment of the present invention, the fluid distributing unit of each of the fuel cell packs forms a connectivity structure for guiding a reaction fluid to enter the fuel cell pack. The connectivity structure can include a combination of a serial connection, a parallel connection, and a serial-parallel connection.

### BRIEF DESCRIPTION OF THE DRAWINGS

FIG. 1 illustrates an exploded perspective view of the fuel cell pack of the first embodiment of the present invention.
FIG. 2 illustrates an exploded perspective view of the fuel cell pack of the second embodiment of the present invention.
FIG. 3 illustrates an exploded perspective view of the fuel cell pack of the third embodiment of the present invention.
FIG. 4 illustrates an exploded perspective view of the fuel cell pack of the fourth embodiment of the present invention.
FIG. 5 illustrates an exploded perspective view of the fuel cell pack of the fifth embodiment which is not according to the present invention.
FIG. 6a illustrates a schematic drawing of the connected conductive panel of one embodiment.
FIG. 6b illustrates a schematic drawing of the connected conductive panel of another embodiment.
FIG. 6c illustrates a schematic drawing of the connected conductive panel of another embodiment.
FIG. 7 illustrates a schematic drawing of the fuel cell pack of one embodiment of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

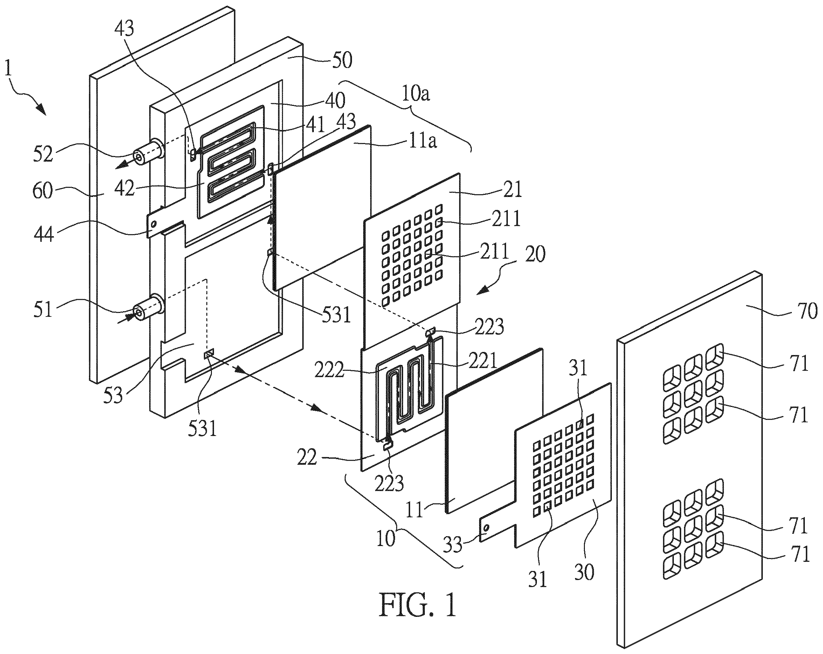

Please refer to FIG. 1, which illustrates the fuel cell pack of the first embodiment of the present invention. FIG. 1 is an exploded perspective view of the fuel cell pack of the first embodiment of the present invention.

The fuel cell pack 1 of the present invention includes: an N membrane electrode assembly 11, an N-1 connected conductive panel 20, an independent first electrode conductive layer 30, an independent second electrode conductive layer 40, a fluid distributing unit 50, a first appearance part 60, and a second appearance part 70, wherein N is an integer and 2≦N≦3000.

Each connected conductive panel 20 comprises both a first electrode conductive layer 21 (such as an anode conductive plate) and a second electrode conductive layer 22 (such as a cathode conductive plate), and the first electrode conductive layer 21 connects to the second electrode conductive layer 22. Also, as shown in FIG. 1, the first electrode conductive layer 21 and the second electrode conductive layer 22 are located on different planes. In the present embodiment, the first electrode conductive layer 21 and the second electrode conductive layer 22 are connected integrally in a ladder arrangement. The independent first electrode conductive layer 30 is corresponding to the second electrode conductive layer 22 of the N-1 connected conductive panel 20. The independent second electrode conductive layer 40 is corresponding to the first electrode conductive layer 21 of the 1^{st} connected conductive panel 20. It is to be noted that, in the embodiment of the present invention, "the first electrode" and "the second electrode" represent the different polarities of the electrochemical reactions; for example, if "the first electrode" is the anode, then "the second electrode" is the cathode; if "the first electrode" is the cathode, then "the second electrode" is the anode.

Via the abovementioned structure, each membrane electrode assembly 11 is located between each first electrode conductive layer (including the first electrode conductive layer 21 and the independent first electrode conductive layer 30) and each second electrode conductive layer (including the second electrode conductive layer 22 and the independent second electrode conductive layer 40), allowing each corresponding membrane electrode assembly 11, each first electrode conductive layer (including the first electrode conductive layer 21 and the independent first electrode conductive layer 30), and each second electrode conductive layer (including the second electrode conductive layer 22 and the independent second electrode conductive layer 40) to form a fuel cell 10, such that N fuel cells 10 will be formed.

As shown in FIG. 1, in the present embodiment, N=2; therefore, the fuel cell pack 1 of the present invention includes two membrane electrode assemblies 11, 11a, a connected conductive panel 20, an independent first electrode conductive layer 30, an independent second electrode conductive layer 40, a fluid distributing unit 50, a first appearance part 60, and a second appearance part 70.

As shown in FIG. 1, the second electrode conductive layer 22 of the connected conductive panel 20 is corresponding to the independent first electrode conductive layer 30, and one membrane electrode assembly 11 is located between the second electrode conductive layer 22 of the connected conductive panel 20 and the independent first electrode conductive layer 30 to form the fuel cell 10. The first electrode conductive layer 21 of the connected conductive panel 20 is corresponding to the independent second electrode conductive layer 40, and one membrane electrode assembly 11a is located between the first electrode conductive layer 21 of the connected conductive panel 20 and the independent second electrode conductive layer 40 to form the fuel cell 10a, such that the fuel cell pack 1 of the present embodiment includes two fuel cells 10, 10a.

In the present embodiment, as shown in FIG. 1, the first electrode conductive layer 21 of the connected conductive panel 20 and the independent first electrode conductive layer 30 both include a plurality of ventilation holes 211, 31 in a reticular arrangement for auxiliary discharging of the water produced by an electrochemical reaction between the membrane electrode assemblies 11, 11a and a reacting fuel (such as hydrogen).

As shown in FIG. 1, in the present embodiment, the second electrode conductive layer 22 of the connected conductive panel 20 has fluid channels 221, 41, a convex structure 222, and a plurality of perforations 223, wherein the convex structure 222 of the second electrode conductive layer 22 is located near the fluid channel 221, and the convex structure 222 closely is in contact with the membrane electrode assembly 11. Also, as shown in FIG. 1, the plurality of perforations 223 of the second electrode conductive layer 22 are located at the two ends of the fluid channel 221, allowing the reacting fuel to enter the fluid channel 221 from the perforation 223 to electrochemically react with the membrane electrode assembly 11, such that the fuel cell 10 will produce electricity.

The independent second electrode conductive layer 40 includes a fluid channel 41, a convex structure 42, and a plurality of perforations 43. The convex structure 42 of the independent second electrode conductive layer 40 is located near the fluid channel 41, as shown in FIG. 1; the convex structure 42 closely is in contact with the membrane electrode assembly 11a. Also, as shown in FIG. 1, the plurality of perforations 43 of the independent second electrode conductive layer 40 are located at the two ends of the fluid channel 41, allowing the reacting fuel to enter the fluid channel 41 from the perforation 43 to electrochemically react with the membrane electrode assembly 11a, such that the fuel cell 10a will produce electricity.

It is to be noted that the connected conductive panel 20, the independent first electrode conductive layer 30, and the independent second electrode conductive layer 40 are made of a conductive material with high gas tightness; also, via the close contact between the convex structures 222, 42 and the membrane electrode assemblies 11, 11a, and the design of the fluid channels 221, 41, the reacting fuel (such as hydrogen) can be guided to flow into the fluid channels 221, 41 and electrochemically react with the membrane electrode assemblies 11, 11a evenly. Meanwhile, since the apertures of the fluid channels 221, 41 are small, the volume of the water which is produced by the electrochemical reaction and remains in the fluid channels 221, 41 will not be large; therefore, when the water remains in the fluid channels 221, 41, if the reacting fuel is continuously guided to enter the fluid channels 221, 41, the water which remains in the fluid channels 221, 41 can be discharged, such that the cell performance reliability of the fuel cell pack 1 of the present invention can be ensured.

In the present embodiment, as shown in FIG. 1, the fluid distributing unit 50 of the fuel cell pack 1 of the present invention further includes a first hole 51, a second hole 52, and a container 53. The position of the first hole 51 is corresponding to the fuel cell 10, and the position of the second hole 52 is corresponding to the fuel cell 10a. Also, the surface of the fluid distributing unit 50 of the fuel cell pack 1 of the present embodiment further includes a plurality of containers 53 to contain and connect to the second electrode conductive layer 22 and the independent second electrode conductive layer 40.

When the fuel cell pack 1 of the present invention functions, the reacting fuel (such as hydrogen) must be guided to all the fuel cells 10 in the fuel cell pack 1 of the present invention from the first hole 51, and the direction of the dashed arrow shown in FIG. 1 represents the flow path of the reacting fuel in the fuel cells 10, 10a. As shown in FIG.1, in the present embodiment, the reacting fuel enters the fluid distributing unit 50 via the first hole 51 and passes through the ventilation hole 531 and the perforation 223; then the reacting fuel enters the fluid channel 221 from one end of the fluid channel 221 and electrochemically reacts with the membrane electrode assembly 11, after which it leaves the second electrode conductive layer 22 from another end of the fluid channel 221; then, the reacting fuel enters the fluid channel 41 of the independent second electrode conductive layer 40 from the perforation 43 to electrochemically react with the membrane electrode assembly 11a, after which it leaves the fuel cell pack 1 of the present invention from the second hole 52.

It is to be noted that if the reacting fuel enters the N fuel cells 10 of the present invention from the first hole 51 along the direction shown in FIG. 1, the reacting fuel can sequentially flow into the second electrode conductive layer 22 of the first connected conductive panel 20, the second electrode conductive layer 22 of the second connected conductive panel 20, and so on. After the reacting fuel 90 flows into the second electrode conductive layer 22 of the N-1th connected conductive panel 20, the reacting fuel finally flow into the independent second electrode conductive layer 40. However, the present invention is not limited to that design; the reacting fuel can also enter the N fuel cells 10 from the second hole 52, allowing lowing the reacting fuel to enter the independent second electrode conductive layer 40 first, and sequentially enter the N-1th second electrode conductive layer 22 of the connected conductive panel 20.

In the present embodiment, as shown in FIG. 1, the first appearance part 60 is in contact with another surface of the fluid distributing unit 50, and the second appearance part 70 connects to the first electrode conductive layer 21 and the independent first electrode conductive layer 30; the second appearance part 70 includes a plurality of ventilation holes 71 for discharging the water produced from the reaction in the fuel cells 10, 10a. Also, the independent first electrode conductive layer 30 and the independent second electrode conductive layer 40 further include a power connector 33 and a power connector 44 for connecting to an external loading unit, allowing the fuel cell pack 1 of the present invention to provide power to the external device. It is to be known that, in the present embodiment, the first appearance part 60 and the second appearance part 70 are both water-absorbent and lightweight, and a suitable material of the first appearance part 60 and the second appearance part 70 can be a porous material or a hydrophilic material.

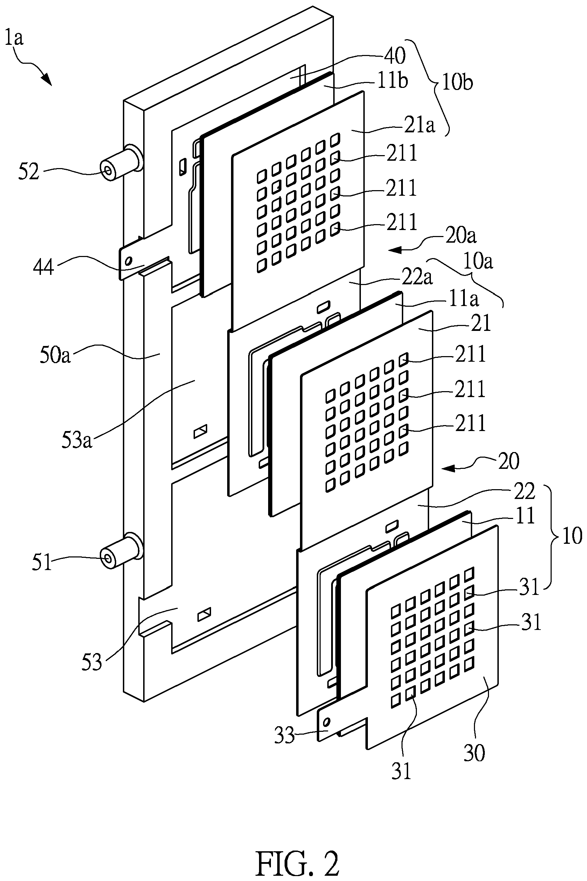

Please refer to FIG. 2, which illustrates the fuel cell pack of the second embodiment of the present invention. FIG. 2 is an exploded perspective view of the fuel cell pack of the second embodiment of the present invention.

As shown in FIG. 2, in the present embodiment; N=3, therefore, the fuel cell pack 1a of the present invention includes three membrane electrode assemblies 11, 11a, 11b, two connected conductive panels 20, 20a, an independent first electrode conductive layer 30, an independent second electrode conductive layer 40, a fluid distributing unit 50a, a first appearance part 60 (not shown in the figure), and a second appearance part 70 (not shown in the figure), wherein the three membrane electrode assemblies 11, 11a, 11b are arranged in a line.

As shown in FIG. 2, the second electrode conductive layer 22 of the connected conductive panel 20 is opposite to the independent first electrode conductive layer 30, and the membrane electrode assembly 11 is located between the second electrode conductive layer 22 of the connected conductive panel 20 and the independent first electrode conductive layer 30 to form the fuel cell 10. The first electrode conductive layer 21 of the connected conductive panel 20 is opposite to the second electrode conductive layer 22a of the connected conductive panel 20a, and the membrane electrode assembly 11a is located between the first electrode conductive layer 21 of the connected conductive panel 20 and the second electrode conductive layer 22a of the connected conductive panel 20a to form the fuel cell 10a. The first electrode conductive layer 21a of the connected conductive panel 20a is opposite to the independent second electrode conductive layer 40, and the membrane electrode assembly 11b is located between the first electrode conductive layer 21a of the connected conductive panel 20a and the independent second electrode conductive layer 40 to form the fuel cell 10b, such that the fuel cell pack 1 of the present embodiment includes three fuel cells 10, 10a, 10b. Meanwhile, as shown in FIG. 2, the fluid distributing unit 50a of the present embodiment has two containers 53 and a container 53a, wherein the shape of the two containers 53 are respectively corresponding to the independent first electrode conductive layer 30 and the independent second electrode conductive layer 40 for respectively containing the independent first electrode conductive layer 30 and the independent second electrode conductive layer 40; the shape of the container 53a is corresponding to the second electrode conductive layer 22a of the connected conductive panel 20a for containing the second electrode conductive layer 22a. It is to be known that, in addition to the abovementioned differences, the working method and the structure of every unit of the fuel cell pack 1a of the present invention are the same as those of the fuel cell pack 1, so there is no need for further description of the same part.

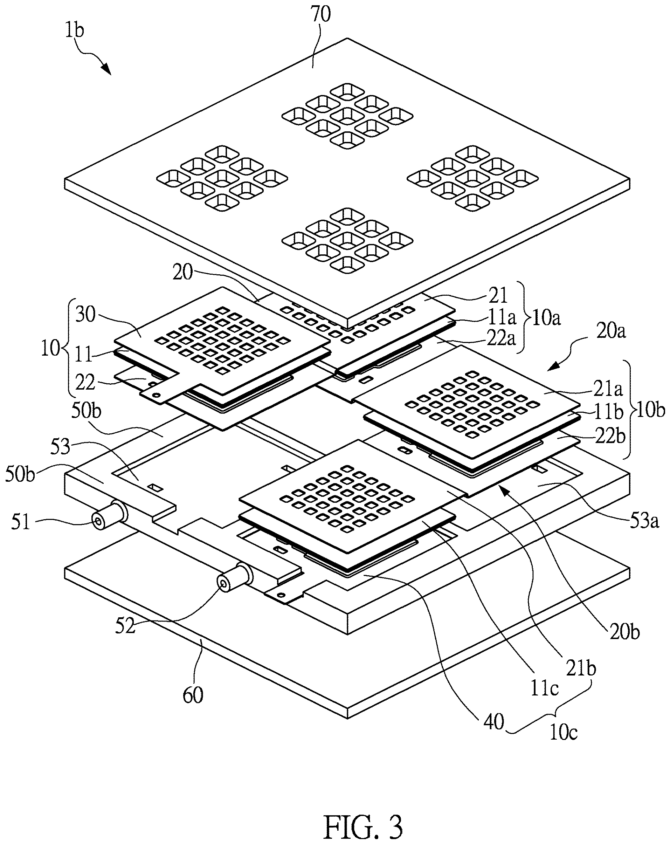

Please refer to FIG. 3, which illustrates the fuel cell pack of the third embodiment of the present invention. FIG. 3 is an exploded perspective view of the fuel cell pack of the third embodiment of the present invention.

As shown in FIG. 3, in the present embodiment, N=4; therefore, the fuel cell pack 1b of the present embodiment includes four membrane electrode assemblies 11, 11a, 11b, 11c, three connected conductive panels 20, 20a, 20b, an independent first electrode conductive layer 30, an independent second electrode conductive layer 40, a fluid distributing unit 50b, a first appearance part 60a, and a second appearance part 70a, wherein each membrane electrode assembly 11, 11a, 11b, 11c is arranged in a square.

In addition to the abovementioned differences, each membrane electrode assembly 11, 11a, 11b, 11c is respectively located between each first electrode conductive layer (including the first electrode conductive layers 21, 21a, 21c and the independent first electrode conductive layer 30), and each second electrode conductive layer (including the second electrode conductive layers 22, 22a, 22c and the independent second electrode conductive layer 40), allowing each of the corresponding membrane electrode assemblies 11, 11a, 11b, 11c, each first electrode conductive layer (including the first electrode conductive layers 21, 21a, 21c, and the independent first electrode conductive layer 30), and each second electrode conductive layer (including the second electrode conductive layers 22, 22a, 22c, and the independent second electrode conductive layer 40) to form the fuel cells 10, 10a, 10b, 10c, such that four fuel cells 10, 10a, 10b, 10c can be formed. It is to be known that, in addition to the abovementioned differences, the working method and the structure of every unit of the fuel cell pack 1b of the present invention are as same as those of the fuel cell pack 1, so there is no need for further description of the same part.

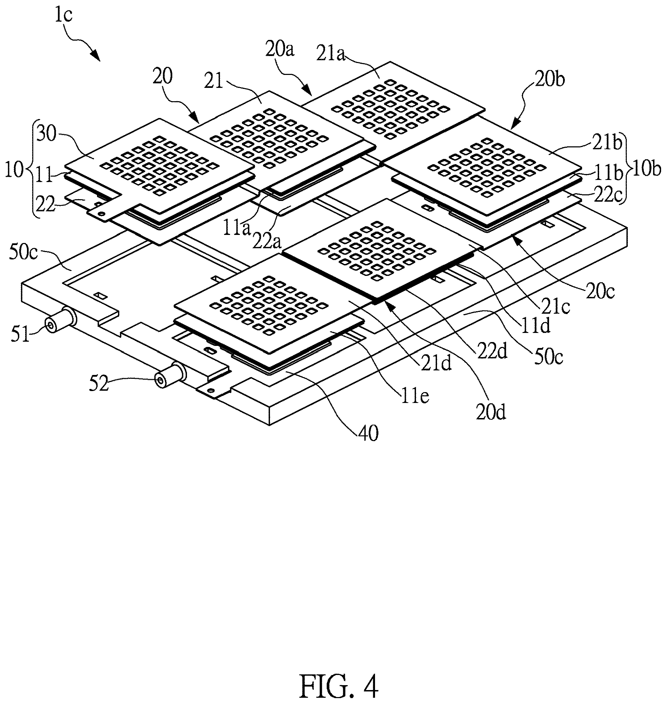

Please refer to FIG. 4, which illustrates the fuel cell pack of the fourth embodiment of the present invention. FIG. 4 is an exploded perspective view of the fuel cell pack of the fourth embodiment of the present invention.

As shown in FIG. 4, in the present embodiment, N=6; therefore, the fuel cell pack 1c of the present invention includes six membrane electrode assemblies 11, 11a, 11b, 11c, 11d, 11e, five connected conductive panels 20, 20a, 20b, 20c, 20d, an independent first electrode conductive layer 30, an independent second electrode conductive layer 40, a fluid distributing unit 50c, a first appearance part 60 (not shown in the figure), and a second appearance part 70 (not shown in the figure), wherein the membrane electrode assemblies 11, 11a, 11b, 11c, 11d, 11e are arranged side by side.

As shown in FIG. 4, each membrane electrode assembly 11, 11a, 11b, 11c, 11d, 11e is respectively located between each first electrode conductive layer (including the first electrode conductive layers 21, 21a, 21c, 21d and the independent first electrode conductive layer 30) and each second electrode conductive layer (including the second electrode conductive layers 22, 22a, 22c, 22d and the independent second electrode conductive layer 40), allowing each corresponding membrane electrode assembly 11, 11a, 11b, 11c, 11d, 11e, each first electrode conductive layer (including the first electrode conductive layers 21, 21a, 21c, 21d, and the independent first electrode conductive layer 30), and each second electrode conductive layer (including the second electrode conductive layers 22, 22a, 22c, 22d, and the independent second electrode conductive layer 40) to form fuel cells 10, 10a, 10b, 10c, such that six fuel cells 10 can be formed. It is to be known that, in addition to the abovementioned differences, the working method and the structure of every unit of the fuel cell pack 1c of the present invention are as same as those of the fuel cell pack 1, so there is no need for further description of the same part.

From examination of the second embodiment to the fourth embodiment, it can be concluded that when N≧3 (as in the embodiments shown in FIG. 2 to FIG. 4), the second electrode conductive layer 22 of the nth connected conductive panel 20 is corresponding to the first electrode conductive layer 21 of the n+1th connected conductive panel 20, wherein n is an integer between 1 and N-2; for example, if N=4, n can be 1 or 2; if N=6, n can be 1, 2, 3, or 4.

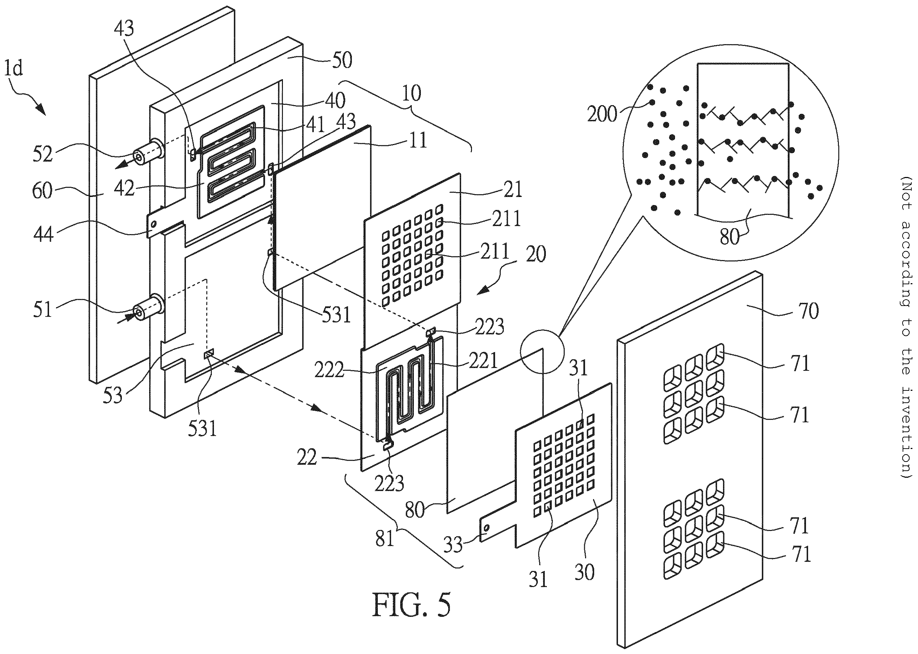

Please refer to FIG. 5, which illustrates the fuel cell pack of fifth embodiment of the present invention. FIG. 5 is an exploded perspective view of the fuel cell pack of the fifth embodiment of the present invention.

The difference between the fifth embodiment and the first four embodiments is that the amount of the membrane electrode assemblies 11 of the fifth embodiment is one less, and the amount of the draining membranes 80 is one more, so the amount of the membrane electrode assemblies 11 of the fifth embodiment is as same as the amount of the connected conductive panels 20. As shown in FIG. 5, the fuel cell pack 1d of the present embodiment includes a connected conductive panel 20, a draining membrane 80, an independent first electrode conductive layer 30, an independent second electrode conductive layer 40, a fluid distributing unit 50, a first appearance part 60, and a second appearance part 70.

As shown in FIG. 5, the draining membrane 80 of the present embodiment which is not according to the present invention is located between the independent first electrode conductive layer 30 and the second electrode conductive layer 22 of the 1^{st} connected conductive panel of the corresponding independent first electrode conductive layer 30 to form a draining unit 81. In the present embodiment, the draining membrane 80 is made of an airtight, hydrophilic polymer material, such as a polymer with sulfonic acid. Also, the membrane electrode assembly 11 of the present embodiment is located between the independent second electrode conductive layer 40 and the first electrode conductive layer 21 of the 1^{st} connected conductive panel 20 of the corresponding independent second electrode conductive layer 40, to form a fuel cell 10.

When the reacting fuel enters the fuel cell pack 1d, the reacting fuel in the fluid channel 221 is high in temperature and humidity, allowing fluid to pool easily in the fluid channel 221, such that the power generation performance of the fuel cell pack 1d will be affected. In order to solve the abovementioned problem, the hydrophilic draining membrane 80 is added into the fuel cell pack 1d, as shown in the partial enlarged view in FIG. 5; because the draining membrane 80 is airtight and hydrophilic, the excessive water vapor 200 and heat in the reacting fuel can be delivered to the independent first electrode conductive layer 30 from the second electrode conductive layer 22 to diffuse to the outside of the fuel cell pack 1d via the second appearance part 70, allowing the flowing path in the fuel cell pack 1d for the reacting fuel to be unimpeded to maintain the power efficiency of the fuel cell pack 1d.

It is to be known that, according to experimentation, in order to achieve a preferable drainage effect, the draining unit 81 must be the first unit to contact the reacting fuel in the fuel cell pack 1d, which means the draining unit 81 should be the unit corresponding to the first hole 51 shown in FIG. 5, to immediately discharge the excessive water vapor and heat in the reacting fuel. However, if the preferred embodiment is not considered, the position of the draining unit 81 can be changed, but the present invention is not limited to the abovementioned description.

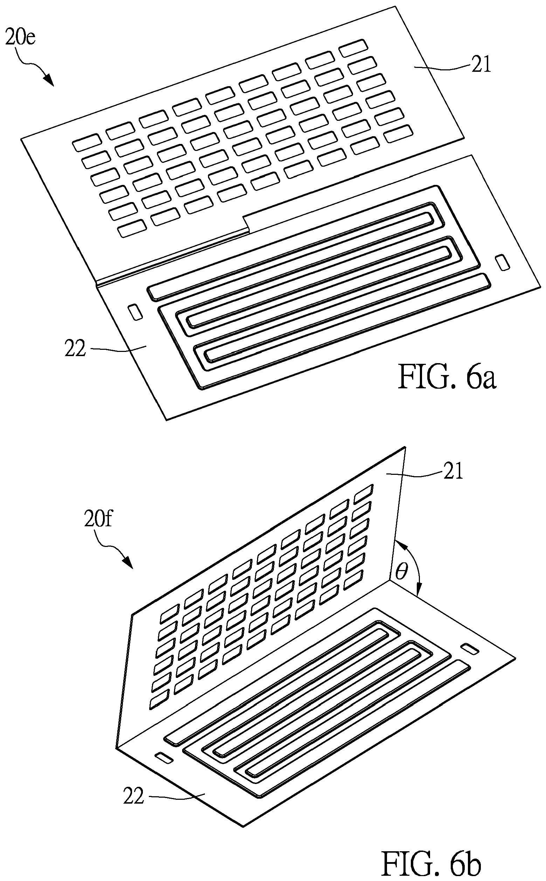

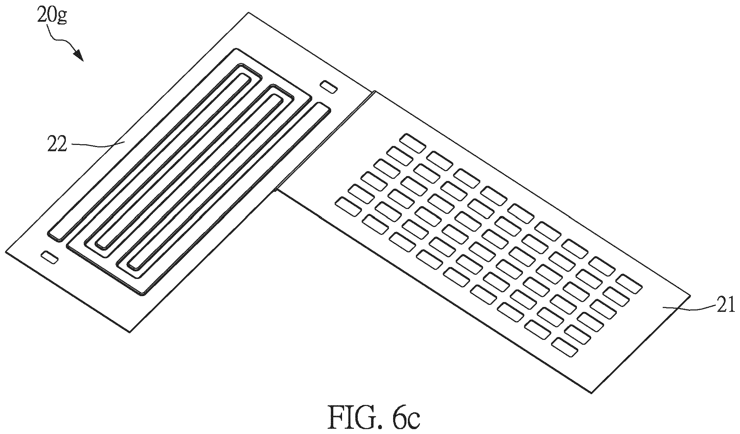

Please refer to FIG. 6a, FIG. 6b, and FIG. 6c, which illustrate every embodiment of the connected conductive panel. FIG. 6a is a schematic drawing of the connected conductive panel of one embodiment. FIG. 6b is a schematic drawing of the connected conductive panel of another embodiment. FIG. 6c is a schematic drawing of the connected conductive panel of still another embodiment.

The shape and the connecting position of the first electrode conductive layer 21 and the second electrode conductive layer 22 can be many variations; below are three different embodiments for description, but the present invention is not limited to the embodiments. As shown in FIG. 6a and FIG. 6b, the first electrode conductive layer 21 and the second electrode conductive layer 22 of the connected conductive panel 20e are rectangular. As shown in FIG. 6a, the first electrode conductive layer 21 and the second electrode conductive layer 22 of the connected conductive panel 20f may be parallel to each other; alternatively, as shown in FIG. 6b, an angle θ can be formed between the first electrode conductive layer 21 and the second electrode conductive layer 22. As shown in FIG. 6c, the first electrode conductive layer 21 of the connected conductive panel 20f can be connected to a minor side of the second electrode conductive layer 22. It is to be known that, if the first electrode conductive layer 21 and the second electrode conductive layer 22 of the connected conductive panel 20 are substantially located on different planes, the angle θ between the first electrode conductive layer 21 and the second electrode conductive layer 22 can be between 30 and 180 degrees.

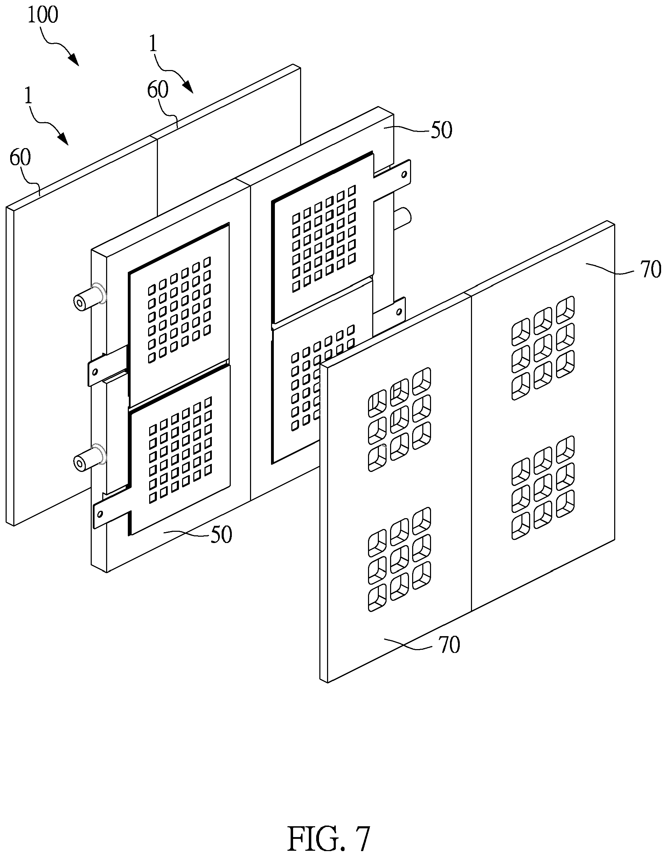

Please refer to FIG. 7, which illustrates a schematic drawing of the fuel cell pack of one embodiment of the present invention.

It is to be known that the plurality of fuel cell packs 1 of the present invention can be assembled to form a fuel cell pack 100, wherein each of the fuel cell packs 1 can be connected serially or in parallel to form a geometric structure, which can be flat, square, circular, polygonal, or a combination of the abovementioned structures. As shown in FIG. 7, the fuel cell pack 100 of the present embodiment is formed via two fuel cell packs 1 with two fuel cells. The two fuel cell packs 1 can be connected to each other via the common combination method in the prior art, such as hooking blending, screw fastening, or viscose. Meanwhile, each fluid distributing unit 50 of the fuel cell pack 1 forms a connectivity structure to guide the reaction fluid to enter the fuel cell pack 1. The abovementioned connectivity structure can include a series connection, a parallel connection, and a combination of series and parallel connections. The fuel cell packs 1, 1a, 1b, 1c of the different embodiments can also be combined based on requirements to increase the applicability of the present invention.

It is noted that the above-mentioned embodiments are only for illustration. It is intended that the present invention cover modifications and variations of this invention provided they fall within the scope of the following claims.

## Claims

1. A fuel cell pack (1, 1a, 1b, 1c, 1d), comprising:
N membrane electrode assemblies (11, 11a, 11b, 11c, 11d, 11e), wherein N is an integer and 2≦N≦3000;
N-1 connected conductive panels (20, 20a, 20b, 20c, 20d, 20e, 20f, 20g), wherein each of the connected conductive panels (20, 20a, 20b, 20c, 20d, 20e, 20f, 20g) comprises a first electrode conductive layer (21, 21a, 21b, 21c, 21d) and a second electrode conductive layer (22, 22a, 22b, 22c, 22d), wherein the first electrode conductive layer (21, 21a, 21b, 21c, 21d) is connected to the second electrode conductive layer (22, 22a, 22b, 22c, 22d);
an independent first electrode conductive layer (30), corresponding to the second electrode conductive layer (22, 22a, 22b, 22c, 22d) of the N-1th connected conductive panel (20, 20a, 20b, 20c, 20d, 20e, 20f, 20g); and
an independent second electrode conductive layer (40), corresponding to the first electrode conductive layer (21, 21a, 21b, 21c, 21d) of the 1^{st} connected conductive panel (20, 20a, 20b, 20c, 20d, 20e, 20f, 20g);
whereby, each of the membrane electrode assemblies (11, 11a, 11b, 11c, 11d, 11e) is located between each of the first electrode conductive layers (21, 21a, 21b, 21c, 21d, 30) and each of the second electrode conductive layers (22, 22a, 22b, 22c, 22d, 40) to form a fuel cell (10, 10a, 10b, 10c) among each of the membrane electrode assemblies (11, 11a, 11b, 11c, 11d, 11e), each of the first electrode conductive layers (21, 21a, 21b, 21c, 21d, 30), and each of the second electrode conductive layers (22, 22a, 22b, 22c, 22d, 40), forming N fuel cells (10, 10a, 10b, 10c), and when N≧3:
the second electrode conductive layer (22, 22a, 22b, 22c, 22d) of the nth connected conductive panel (20, 20a, 20b, 20c, 20d, 20e, 20f, 20g) is corresponding to the first electrode conductive layer (21, 21a, 21b, 21c, 21d) of the n+1th connected conductive panel (20, 20a, 20b, 20c, 20d, 20e, 20f, 20g), wherein n is an integer between 1 and N-2; wherein the first electrode conductive layer (21, 21a, 21b, 21c, 21d) and the second electrode conductive layer (22, 22a, 22b, 22c, 22d) of each of the connected conductive panels (20, 20a, 20b, 20c, 20d, 20e, 20f, 20g) are in a ladder arrangement;
**characterized in that**
each of the second electrode conductive layers (22, 22a, 22b, 22c, 22d) and the independent second electrode conductive layer (40) comprise a fluid channel (221, 41) and a convex structure (222, 42), wherein the convex structure (222, 42) is located around the fluid channel (221, 41); the convex structure (222, 42) is in contact with the membrane electrode assembly (11, 11a, 11b, 11c, 11d, 11e) correspondingly;
the fuel cell pack further comprising a fluid distributing unit (50, 50a, 50b, 50c), a surface of the fluid distributing unit (50, 50a, 50b,50c) being connected to the N-1 second electrode conductive layers (22, 22a, 22b, 22c, 22d) and the independent second electrode conductive layer (40);
said fuel cell pack (1, 1a, 1b, 1c, 1d) further comprising a first appearance part (60) and a second appearance part (70), which is in contact with another surface of the fluid distributing unit (50,50a, 50b,50c); wherein the second appearance part (70) are connected to the N-1 first electrode conductive layers (21, 21a, 21b, 21c, 21d) and the independent first electrode conductive layer (30), and the second appearance part (70) comprises a plurality of ventilation holes (71) configured to discharge the water produced from the reaction in the fuel cells (10, 10a).

2. The fuel cell pack (1, 1a, 1b, 1c, 1d) as claimed in Claim 1, wherein each of the second electrode conductive layers (22, 22a, 22b, 22c, 22d) and the independent second electrode conductive layer (40) comprise a plurality of perforations (223), allowing a reacting fuel to sequentially flow into the N fuel cells (10, 10a, 10b, 10c).

3. The fuel cell pack (1, 1a, 1b, 1c, 1d) as claimed in any of the preceding Claims, wherein the fluid distributing unit (50, 50a, 50b, 50c) comprises a first hole (51) and a second hole (52), a position of the first hole (51) corresponding to a position of the 1^{st} fuel cell (10, 10a, 10b, 10c), and a position of the second hole (52) corresponding to the Nth fuel cell (10, 10a, 10b, 10c).

4. The fuel cell pack (1, 1a, 1b, 1c, 1d) as claimed in any of the claims 1, 2, and 3, wherein each of the first electrode conductive layers (21, 21a, 21b, 21c, 21d) and the independent first electrode conductive layer (30) comprise a plurality of ventilation holes (211, 31) for auxiliary discharging of the water produced by an electrochemical reaction and a reacting fuel.

5. The fuel cell pack (1, 1a, 1b, 1c, 1d) as claimed in any of the claims 1, 2, 3, and 4, wherein the independent first electrode conductive layer (30) and the independent second electrode conductive layer (340) both comprise a power connector (33,44).

6. The fuel cell pack (1, 1a, 1b, 1c, 1d) as claimed in any of the claims 1, 2, 3, 4, and 5, wherein an angle θ is formed between the first electrode conductive layer (21, 21a, 21b, 21c, 21d) and the second electrode conductive layer (22, 22a, 22b, 22c, 22d) of each of the connected conductive panels (20, 20a, 20b, 20c, 20d, 20e, 20f, 20g), wherein the angle θ is between 30° and 180°.

7. A fuel cell pack (100) assembly, formed from a plurality of the fuel cell packs (1, 1a, 1b, 1c, 1d) as claimed in any of the Claims 1, 2, 3, 4, 5, or 6, wherein each of the fuel cell packs (1, 1a, 1b, 1c, 1d) forms a geometric structure via a serial-parallel connection, and the geometric structure can be flat, square, circular, polygonal, or a combination of the abovementioned structures; wherein a fluid distributing unit (50, 50a, 50b, 50c) of each of the fuel cell packs (1, 1a, 1b, 1c, 1d) forms a connectivity structure for guiding a reaction fluid to enter the fuel cell pack (1, 1a, 1b, 1c, 1d) ; the connectivity structure can comprise a combination of a serial connection, a parallel connection, and a serial-parallel connection.

## Patentansprüche

1. Brennstoffzellenpackung (1, 1a, 1b, 1c, 1d), enthaltend:
N Membranenelektrodenanordnungen (11, 11a, 11b, 11c, 11d, 11e), wobei N eine ganze Zahl ist, und 2 ≤ N ≤ 3000 ist;
N-1 verbundene Leiterplatten (20, 20a, 20b, 20c, 20d, 20e, 20f, 20g), wobei jede der verbundenen Leiterplatten (20, 20a, 20b, 20c, 20d, 20e, 20f, 20g) eine erste Elektrodenleiterschicht (21, 21a, 21b, 21c, 21d) und eine zweite Elektrodenleiterschicht (22, 22a, 22b, 22c, 22d) aufweist, wobei die erste Elektrodenleiterschicht (21, 21a, 21b, 21c, 21d) mit der zweiten Elektrodenleiterschicht (22, 22a, 22b, 22c, 22d) verbunden ist;
eine unabhängige erste Elektrodenleiterschicht (30), die der zweiten Elektrodenleiterschicht (22, 22a, 22b, 22c, 22d) der N-1ten verbundenen Leiterplatte (20, 20a, 20b, 20c, 20d, 20e, 20f, 20g) entspricht; und
eine unabhängige zweite Elektrodenleiterschicht (40), die der ersten Elektrodenleiterschicht (21, 21a, 21b, 21c, 21d) der verbundenen Leiterplatte (20, 20a, 20b, 20c, 20d, 20e, 20f, 20g) entspricht;
wobei jede der Membranenelektrodenanordnungen (11, 11a, 11b, 11c, 11d, 11e) zwischen jeder der ersten Elektrodenleiterschichten (21, 21a, 21b, 21c, 21d, 30) und jeder der zweiten Elektrodenleiterschichten (22, 22a, 22b, 22c, 22d, 40) angeordnet ist, um eine Brennstoffzelle (10, 10a, 10b, 10c) unter jeder der Membranenelektrodenanordnungen (11, 11a, 11b, 11c, 11d, 11e) zu bilden, wobei jede der ersten Elektrodenleiterschichten (21, 21a, 21b, 21c, 21d, 30) und jede der zweiten Elektrodenleiterschichten (22, 22a, 22b, 22c, 22d, 40) N Brennstoffzellen (10, 10a, 10b, 10c) bilden, und wenn N > 3 ist:
die zweite Elektrodenleiterschicht (22, 22a, 22b, 22c, 22d) der n-ten verbundenen Leiterplatte (20, 20a, 20b, 20c, 20d, 20e, 20f, 20g) der ersten Elektrodenleiterschicht (21, 21a, 21b, 21c, 21d) der n+1-ten verbundenen Leiterplatte (20, 20a, 20b, 20c, 20d, 20e, 20f, 20g) entspricht, wobei n eine ganze Zahl zwischen 1 und N-2 ist;
wobei sich die erste Elektrodenleiterschicht (21, 21a, 21b, 21c, 21d) und die zweite Elektrodenleiterschicht (22, 22a, 22b, 22c, 22d) jeder der verbundenen Leiterplatten (20, 20a, 20b, 20c, 20d, 20e, 20f, 20g) in einer Stufenanordnung befinden;
**dadurch gekennzeichnet, dass**
jede der zweiten Elektrodenleiterschichten (22, 22a, 22b, 22c, 22d) und die unabhängige zweiten Elektrodenleiterschicht (40) einen Fluidkanal (221, 41) und eine konvexe Struktur (222, 42) aufweisen, wobei die konvexe Struktur (222, 42) um den Fluidkanal (221, 41) angeordnet ist; die konvexe Struktur (222, 42) entsprechend mit der Membranenelektrodenanordnung (11, 11a, 11b, 11c, 11d, 11e) in Berührung steht;
die Brennstoffzellenpackung ferner eine Fluidverteilungseinheit (50, 50a, 50b, 50c) aufweist, wobei eine Fläche der Fluidverteilungseinheit (50, 50a, 50b, 50c) mit den N-1 zweiten Elektrodenleiterschichten (22, 22a, 22b, 22c, 22d) und der unabhängigen zweiten Elektrodenleiterschicht (40) verbunden ist;
die Brennstoffzellenpackung (1, 1a, 1b, 1c, 1d) ferner ein erstes aufscheinendes Teil (60) und ein zweites aufscheinendes Teil (70) aufweist, das mit einer weiteren Fläche der Fluidverteilungseinheit (50, 50a, 50b, 50c) in Berührung steht; wobei das zweite aufscheinende Teil (70) mit den N-1 ersten Elektrodenleiterschichten (21, 21a, 21b, 21c, 21d) und der unabhängigen ersten Elektrodenleiterschicht (30) verbunden ist, und das zweite aufscheinende Teil (70) mehrere Lüftungsöffnungen (71) enthält, die dazu eingerichtet sind, das Wasser zu entleeren, das von der Reaktion in den Brennstoffzellen (10, 10a) her entsteht.

2. Brennstoffzellenpackung (1, 1a, 1b, 1c, 1d) nach Anspruch 1, wobei jede der zweiten Elektrodenleiterschichten (22, 22a, 22b, 22c, 22d) und die unabhängige zweite Elektrodenleiterschicht (40) mehrere Perforationen (223) aufweisen, so dass es einem reagierenden Brennstoff erlaubt ist, der Reihe nach in die N Brennstoffzellen (10, 10a, 10b, 10c) einzuströmen.

3. Brennstoffzellenpackung (1, 1a, 1b, 1c, 1d) nach einem beliebigen der vorstehenden Ansprüche, wobei die Fluidverteilungseinheit (50, 50a, 50b, 50c) ein erstes Loch (51) und ein zweites Loch (52) aufweist, wobei eine Position des ersten Lochs (51) einer Position der ersten Brennstoffzelle (10, 10a, 10b, 10c) entspricht, und eine Position des zweiten Lochs (52) der n-ten Brennstoffzelle (10, 10a, 10b, 10c) entspricht.

4. Brennstoffzellenpackung (1, 1a, 1b, 1c, 1d) nach einem beliebigen der Ansprüche 1, 2 und 3, wobei jede der ersten Elektrodenleiterschichten (21, 21a, 21b, 21c, 21d) und die unabhängige erste Elektrodenleiterschicht (30) mehrere Lüftungsöffnungen (211, 31) aufweisen, um hilfsweise Wasser abzulassen, das durch eine elektrochemische Reaktion und einem reagierenden Brennstoff erzeugt ist.

5. Brennstoffzellenpackung (1, 1a, 1b, 1c, 1d) nach einem beliebigen der Ansprüche 1, 2, 3 und 4, wobei die unabhängige erste Elektrodenleiterschicht (30) und die unabhängige zweite Elektrodenleiterschicht (340) beide einen Stromstecker (33, 44) aufweisen.

6. Brennstoffzellenpackung (1, 1a, 1b, 1c, 1d) nach einem beliebigen der Ansprüche 1, 2, 3, 4 und 5, wobei zwischen der ersten Elektrodenleiterschicht (21, 21a, 21b, 21c, 21d) und der zweiten Elektrodenleiterschicht (22, 22a, 22b, 22c, 22d) jeder der verbundenen Leiterplatten (20, 20a, 20b, 20c, 20d, 20e, 20f, 20g) ein Winkel θ gebildet ist, wobei der Winkel θ zwischen 30° und 180° beträgt.

7. Brennstoffzellenpackungsanordnung (100), die anhand mehrere der Brennstoffzellenpackungen (1, 1a, 1b, 1c, 1d) nach einem beliebigen der Ansprüche 1, 2, 3, 4, 5, oder 6 gebildet ist, wobei jede der Brennstoffzellenpackungen (1, 1a, 1b, 1c, 1d) eine geometrische Struktur über eine seriell-parallele Verbindung bildet, und die geometrische Struktur eine ebene, quadratische, runde, polygonale oder eine Kombination der oben erwähnten Strukturen sein kann: wobei eine Fluidverteilungseinheit (50, 50a, 50b, 50c) jeder der Brennstoffzellenpackungen (1, 1a, 1b, 1c, 1d) eine Konnektivitätsstruktur bildet, um ein Reaktionsfluid zu führen, so dass es in die Brennstoffzellenpackung (1, 1a, 1b, 1c, 1d) eintritt; die Konnektivitätsstruktur kann eine Kombination einer seriellen Verbindung, einer parallelen Verbindung und einer seriell-parallelen Verbindung beinhalten.

## Revendications

1. Un bloc de piles à combustible (1, 1a, 1b, 1c, 1d), comprenant :
N assemblages d'électrodes à membrane (11, 11a, 11b, 11c, 11d, 11e), N étant un nombre entier et 2 ≤ N ≤ 3000 ;
N-1 panneaux conducteurs connectés (20, 20a, 20b, 20c, 20d, 20e, 20f, 20g), chacun des panneaux conducteurs connectés (20, 20a, 20b, 20c, 20d, 20e, 20f, 20g) comprenant une première couche conductrice (21, 21a, 21b, 21c, 21d) formant électrode et une deuxième couche conductrice (22, 22a, 22b, 22c, 22d) formant électrode, la première couche conductrice (21, 21a, 21b, 21c, 21d) formant électrode étant connectée à la deuxième couche conductrice (22, 22a, 22b, 22c, 22d) formant électrode ;
une première couche conductrice indépendante (30) formant électrode, correspondant à la deuxième couche conductrice (22, 22a, 22b, 22c, 22d) formant électrode du N-1-ème panneau conducteur connecté (20, 20a, 20b, 20c, 20d, 20e, 20f, 20g) ; et
une deuxième couche conductrice indépendante (40) formant électrode, correspondant à la première couche conductrice (21, 21a, 21b, 21c, 21d) formant électrode du premier panneau conducteur connecté (20, 20a, 20b, 20c, 20d, 20e, 20f, 20g) ;
de sorte que chacun des ensembles d'électrodes à membrane (11, 11a, 11b, 11c, 11d, 11e) est situé entre chacune des premières couches conductrices (21, 21a, 21b, 21c, 21d, 30) formant électrode et que chacune des deuxièmes couches conductrices (22, 22a, 22b, 22c, 22d, 40) formant électrode forment une pile à combustible (10, 10a, 10b, 10c) parmi chacun des ensembles d'électrodes à membrane (11, 11a, 11b, 11c, 11d, 11e), chacune des premières couches conductrices (21, 21a, 21b, 21c, 21d, 30) formant électrode et chacune des deuxième couches conductrices (22, 22a, 22b, 22c, 22d, 40) formant électrode forment N cellules à combustible (10, 10a, 30 10b, 10c), et, lorsque N ≥ 3 :
la deuxième couche conductrice (21, 22a, 22b, 22c, 22d) formant électrode du n-ième panneau conducteur connecté (20, 20a, 20b, 20c, 20d, 20e, 20f, 20g) correspond à la première couche conductrice (21, 21a, 21b, 21c, 21d) formant électrode du n+1-ième panneau conducteur connecté (20, 20a, 20b, 20c, 20d, 20e, 20f, 20g), n étant un nombre entier compris entre 1 et N-2 ;
la première couche conductrice (21, 21a, 21b, 21c, 21d) formant électrode et la deuxième couche conductrice (22, 22a, 22b, 22c, 22d) formant électrode de chacun des panneaux conducteurs connectés (20, 20a, 20b, 20c, 20d, 20e, 20f, 20g) étant dans un agencement d'échelle ;
**caractérisé en ce que**
chacune des deuxième couches conductrices (22, 22a, 22b, 22c, 22d) formant électrode et la deuxième couche conductrice indépendante (40) formant électrode comprennent un canal pour fluide (221, 41) et une structure convexe (222, 42), la structure convexe (222, 42) étant située autour du canal pour fluide (221, 41) ; la structure convexe (222, 42) est en contact avec l'ensemble d'électrodes à membrane (11, 11a, 11b, 11c, 11d, 11e) de manière correspondante ;
le bloc de piles à combustible comprenant en outre une unité (50, 50a, 50b, 50c) de distribution de fluide, une surface de l'unité (50, 50a, 50b, 50c) de distribution de fluide étant connectée aux N-1 deuxième couches conductrices (22, 22a, 22b, 22c, 22d) formant électrode et à la deuxième couche conductrice indépendante (40) formant électrode ;
ledit bloc de piles à combustible (1, 1a, 1b, 1c, 1d) comprenant en outre une première partie d'apparence (60) et une deuxième partie d'apparition (70) qui est en contact avec une autre surface de l'unité (50, 50a, 50b, 50c) de distribution de fluide ; la deuxième partie d'apparition (70) étant reliée aux N-1 premières couches conductrices (21, 21a, 21b, 21c, 21d) formant électrode et à la première couche conductrice indépendante (30) formant électrode, et la deuxième partie d'apparence (70) comprend une pluralité de trous de ventilation (71) configurés pour décharger l'eau produite à partir de la réaction se produisant dans les piles à combustible (10, 10a).

2. Le bloc de piles à combustible (1, 1a, 1b, 1c, 1d) selon la revendication 1, dans lequel chacune des deuxième couches conductrices (22, 22a, 22b, 22c, 22d) formant électrode et la deuxième couche conductrice indépendante (40) formant électrode comprennent une pluralité de perforations (223), permettant à un combustible réactif de s'écouler séquentiellement dans les N piles à combustible (10, 10a, 10b, 10c).

3. Le bloc de piles à combustible (1, 1a, 1b, 1c, 1d) selon l'une quelconque des revendications précédentes, dans lequel l'unité (50, 50a, 50b, 50c) de distribution de fluide comprend un premier trou (51) et un deuxième trou (52), une position du premier trou (51) correspondant à une position de la 1ère pile à combustible (10, 10a, 10b, 10c) et une position du deuxième trou (52) correspondant à la N-ième pile à combustible (10, 10a, 10b, 10c).

4. Le bloc de piles à combustible (1, 1a, 1b, 1c, 1d) selon l'une quelconque des revendications 1, 2 et 3, dans lequel chacune des premières couches conductrices (21, 21a, 21b, 21c, 21d) formant électrode et la première couche conductrice indépendante (30) formant électrode comprennent une pluralité de trous de ventilation (211, 31) pour le déchargement auxiliaire de l'eau produite par une réaction électrochimique et un combustible réactif.

5. Le bloc de piles à combustible (1, 1a, 1b, 1c, 1d) selon l'une quelconque des revendications 1, 2, 3 et 4, dans lequel la première couche conductrice indépendante (30) formant électrode et la deuxième couche conductrice indépendante (340) formant électrode comprennent toutes les deux un connecteur d'alimentation (33, 44).

6. Le bloc de piles à combustible (1, 1a, 1b, 1c, 1d) selon l'une quelconque des revendications 1, 2, 3, 4 et 5, dans lequel un angle θ est formé entre la première couche conductrice (21, 21a, 21b, 21c, 21d) formant électrode et la deuxième couche conductrice (22, 22a, 22b, 22c, 22d) formant électrode de chacun des panneaux conducteurs connectés (20, 20a, 20b, 20c, 20d, 20e, 20f, 20g), l'angle θ étant compris entre 30° et 180°.

7. Un bloc de piles à combustible (100), formé à partir d'une pluralité des blocs de piles à combustible (1, 1a, 1b, 1c, 1d) selon l'une quelconque des revendications 1, 2, 3, 4, 5 ou 6, dans lequel chacun des blocs de piles à combustible (1, 1a, 1b, 1c, 1d) forme une structure géométrique via une connexion série-parallèle, et la structure géométrique peut être plane, carrée, circulaire, polygonale ou une combinaison des structures susmentionnées ; une unité (50, 50a, 50b, 50c) de distribution de fluide de chacun des blocs de piles à combustible (1, 1a, 1b, 1c, 1d) forme une structure de connectivité pour guider un fluide de réaction pour pénétrer dans le bloc de piles à combustible (1, 1a, 1b, 1c, 1d); la structure de connectivité peut comporter une combinaison d'une connexion série, d'une connexion parallèle et d'une connexion série-parallèle.
